# EUROPEAN PATENT APPLICATION

(11) **EP 2 750 325 A2**
(43) Date of publication of application: **02.07.2014**
(21) Application number: 13197946.0
(22) Date of filing: 18.12.2013
(51) Int. Cl.: H04L 12/10, H04L 12/12

(54) **Communication apparatus, communication system, communication method, and recording medium storing communication control program**

(30) Priority: 28.12.2012 JP 2012287968; 28.02.2013 JP 2013039686; 13.03.2013 JP 2013049922
(71) Applicant: Ricoh Company, Ltd., Tokyo 143-8555 (JP)
(72) Inventor: Asai, Takahiro, Tokyo, 143-8555 (JP)
(74) Representative: Schwabe - Sandmair - Marx

(57) **Abstract**

A communication apparatus (10), a communication system (1), a communication method, and a communication control program stored on a recording medium, each of which is capable of communicating with a counterpart communication apparatus (70) using a communication application (1060). When the communication application (1060) is activated at the communication apparatus (10) in response to an activation request generated in the communication apparatus (10), the communication apparatus (10) transmits an activation request that requests to activate a communication application (7060) at the counterpart communication apparatus (70), or notification indicating that preparation to start communication by the communication application (1060) completes, through a network (2).

## Description

### BACKGROUND

### Technical Field

The present invention generally relates to a communication apparatus, a communication system, a communication method, and a communication control program stored in a non-transitory recording medium.

### Description of the Related Art

The recent communication apparatuses such as smart phones or personal computers are installed with a plurality of types of communication applications, such that the communication apparatuses are capable of communicating using different protocols. The communication applications, if activated, periodically communicate with corresponding communication servers even when the applications just run on background, thus consuming electric power even during the time when no communication is carried out. To reduce electric power consumption, the applications, not in use, may be made inactivated. For example, Japanese Patent Application Publication No. JP-2007-328405-A1 discloses a communication apparatus that activates application that corresponds to a telephone number of a user who calls. This, however, means that the user who calls needs to wait until the user on the other end becomes ready for communication. Further, the user who calls can hardly know when to start communication with the user on the other end.

### SUMMARY

According to one aspect of the present invention, a communication apparatus, a communication system, a communication method, and a communication control program stored on a recording medium, each of which is capable of communicating with a counterpart communication apparatus using a communication application. When the communication application is activated at the communication apparatus in response to an activation request generated in the communication apparatus, the communication apparatus transmits an activation request that requests to activate a communication application at the counterpart communication apparatus, or notification indicating that preparation to start communication by the communication application completes, through a network.

Example embodiments of the present invention include a communication apparatus, a communication system, a communication method, and a communication control program stored on a recording medium, each of which is capable of communicating with a counterpart communication apparatus using a communication application. The communication apparatus includes an activation request transmitter that sends an activation request to the communication application, and a data transmitter that transmits an activation request to the counterpart communication apparatus through a network. The activation request requests activation of a communication application at the counterpart communication apparatus that is compatible with the communication application that is activated in response to the activation request.

Example embodiments of the present invention include a communication apparatus, a communication system, a communication method, and a communication control program stored on a recording medium, each of which is capable of communicating with a counterpart communication apparatus using a communication application. The communication apparatus includes: an activation request transmitter that sends an activation request to the communication application, which requests the communication application to be activated to prepare for communication; and a data transmitter that transmits notification to the counterpart communication apparatus via a network after the communication application is activated in response to the activation request, the notification indicating that preparation to start communication by the communication application completes.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic block diagram illustrating a communication system including a plurality of communication terminals according to an example embodiment of the present invention;
FIG. 2 is a perspective view illustrating the outer appearance of one of the communication terminals of the communication system of FIG. 1, according to an example embodiment of the present invention;
FIG. 3 is a schematic block diagram illustrating a hardware structure of the communication terminal of FIG. 2, according to an example embodiment of the present invention;
FIG. 4 is a schematic block diagram illustrating a hardware structure of any one of an application management system and a communication management system of the communication system of FIG. 1, according to an example embodiment of the present invention;
FIG. 5 is a schematic block diagram illustrating a hardware structure of one of the communication terminals of the communication system of FIG. 1, according to an example embodiment of the present invention;
FIG. 6 is a schematic block diagram illustrating a software configuration of the communication terminal of FIG. 3, according to an example embodiment of the present invention;
FIG. 7 is a schematic block diagram illustrating a software configuration of the communication terminal of FIG. 5, according to an example embodiment of the present invention;
FIG. 8 is a schematic block diagram illustrating a functional structure of the communication terminal, application management system, and communication management system of the communication system of FIG. 1, according to an example embodiment of the present invention;
FIG. 9 is an example data structure of an application management table, managed by any one of the communication terminals of the communication system of FIG. 1;
FIG. 10 is an example data structure of a user authentication management table, managed by the application management system of the communication system of FIG. 1;
FIG. 11 is an example data structure of a terminal authentication management table, managed by the communication management system of the communication system of FIG. 1;
FIG. 12 is an example data structure of a terminal state management table, managed by the communication management system of the communication system of FIG. 1;
FIG. 13 is a data sequence diagram illustrating operation of preparing for communication between the communication terminals, performed by the communication system of FIG. 1, according to an example embodiment of the present invention;
FIG. 14 is a data sequence diagram illustrating operation of activating a communication application at a request communication terminal to be ready for communication, performed by the communication system of FIG. 1, according to an example embodiment of the present invention;
FIG. 15 is an illustration of an example contact list screen, displayed at the communication terminal;
FIG. 16 is an illustration of an example communication application list screen, displayed at the communication terminal;
FIGs. 17A and 17B are a data sequence diagram illustrating operation of activating a communication application at a counterpart communication terminal, performed by the communication system of FIG. 1, according to an example embodiment of the present invention; and
FIG 18 is a data sequence diagram illustrating operation of establishing a communication session between the communication terminals, performed by the communication system of FIG 1, according to an example embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION OF EXAMPLE EMBODIMENTS

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits, field programmable gate arrays (FPCAs) computers or the like. These terms in general may be referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

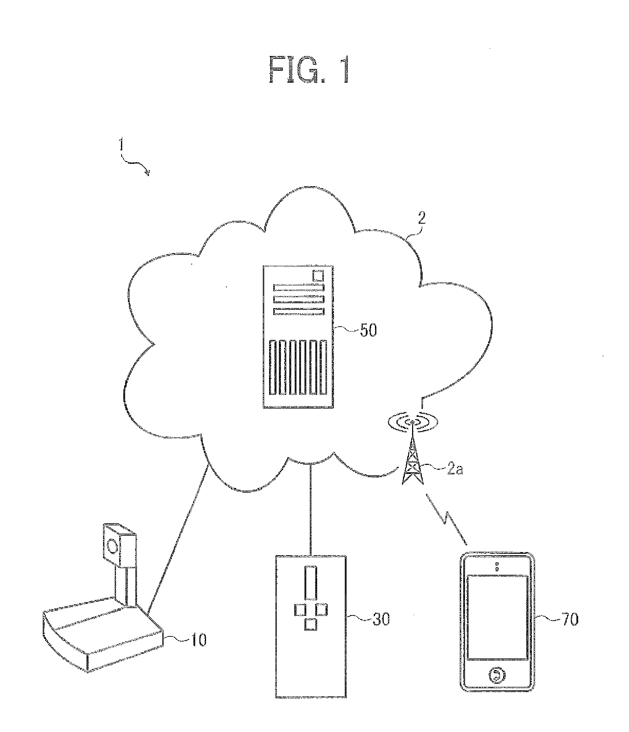

FIG. 1 illustrates a configuration of a communication system according to an example embodiment of the present invention. As illustrated in FIG. 1, the communication system 1 includes a plurality of communication apparatuses such as a first communication terminal 10 and a second communication terminal 70. In this example, the communication terminal 10 is implemented by a videoconference apparatus, which may be managed by a communication management system 50 provided in a communications network 2. The communication terminal 70 is implemented by a smart phone, which may be managed by the communication management system 50 or any other communication management system 50 provided on the communications network 2. The communication system 1 of FIG. 1 further includes an application management system 30 that manages communication applications that may be respectively provided for the plurality of communication apparatus on the communication system 1, in this example, the communication terminals 10 and 70.

The application management system 30 and the communication management system 50 are each implemented by one or more computers that provide the server function. In the communication system 1, a user at the communication terminal 10 and a user at the communication terminal 70 can communicate with each other. More specifically, the communication terminal 10 and the communication terminal 70 transmit or receive various data including sound data such as voices, and/or image data such as a still image or a moving image, through the communications network 2.

The communication terminals 10 and 70, the application management system 30, and the communication management system 50 may communicate with one another, through the communications network 2. In this example, the communications network 2 may be any one of the Internet, wireless telephone network, and/or local area network (LAN), depending on a specific type of the communication apparatus in use. Further, the communications network 2 includes any one of network elements, which may make possible to carry out communication between or among the plurality of communication apparatuses. For example, as illustrated in FIG. 1, the communications network 2 includes the communication management system 50 that manages communication by at least the communication terminal 10, and a base station 2a that is a part of the wireless telephone network and allows the communication terminal 70 to communicate with the other communication apparatus.

While the communication system 1 of FIG. 1 only illustrates one apparatus for each one of the base station 2a, first comnunication terminal 10, application management system 30, communication management system 50, and second communication terminal 70, any desired number of apparatus may be provided. Further, the communication system 1 of FIG. 1 may include any additional apparatuses, depending on the type of communication system 1.

The communication terminal 10 and the communication terminal 70 can communicate with each other via the communications network 2, using the same communication applications or the communication applications that are compatible, For example, it is assumed that the communication applications are compatible when the communication applications are capable of communicating using the same communications protocol. In this example, the communication application includes any desired communication or message application that allows communication between or among a plurality of communication apparatuses. Examples of communication application include, but not limited to, videoconference application, Skype, Google Talk, LINE, FaceTime, Kakao Talk, and Tango. The communication application at the communication terminal usually communicates with the communication management system 50, which is managed or provided by a provider of such communication application. In this example, at least the communication management system 50 is provided for the communication terminal 10, which is implemented by the videoconference apparatus. In addition, another communication management system 50 may be provided, which manages the communication terminal 70, which is implemented by the smart phone.

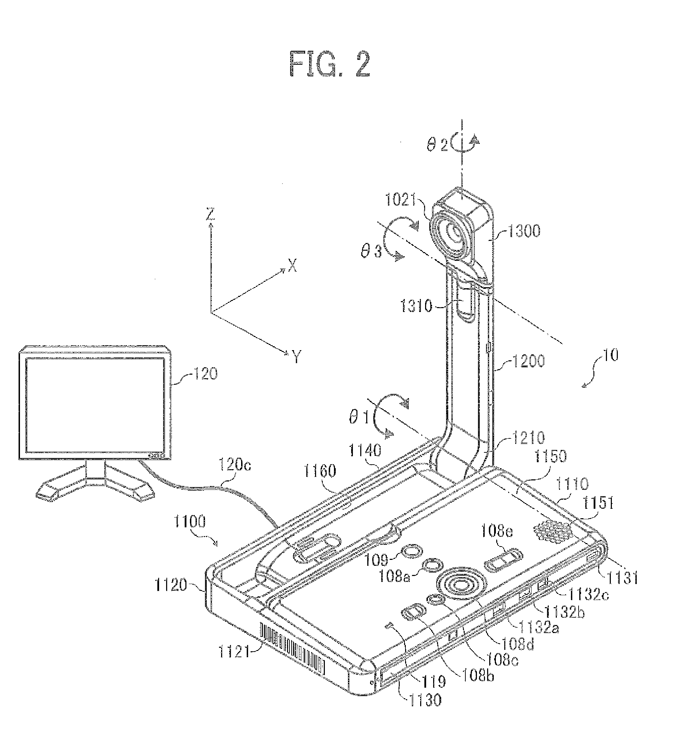

FIG. 2 is a perspective view illustrating the outer appearance of the communication terminal 10 of the communication system of FIG. 1. In this example, the terminal 10 is implemented by the videoconference apparatus capable of carrying out a videoconference.

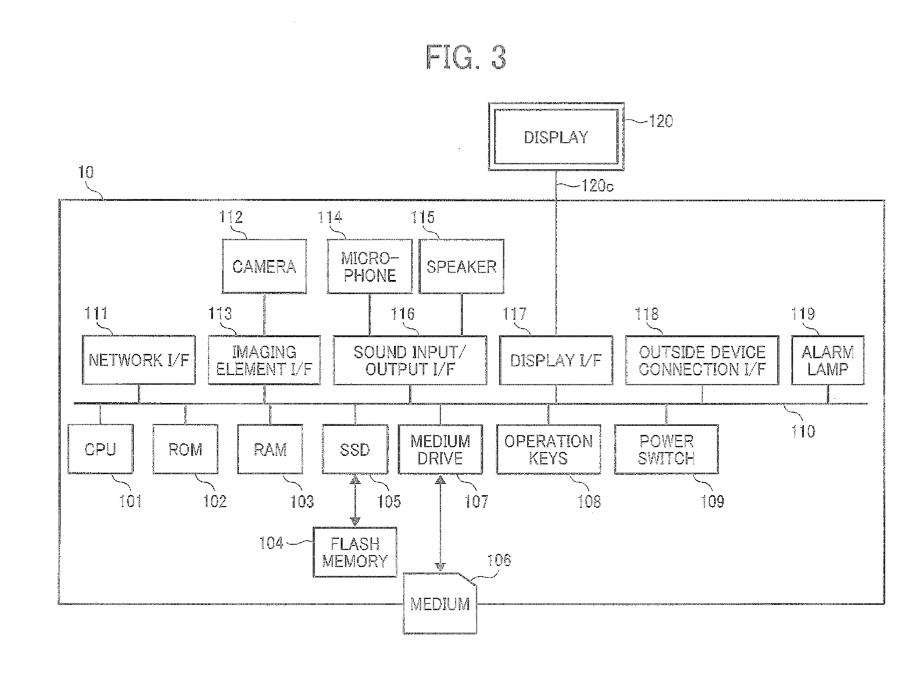

As illustrated in FIG. 2, the communication terminal 10 includes a body 1100, an arm 1200, and a camera housing 1300. The body 1100 includes a first side wall 1110 having a plurality of air intake holes that are formed over the nearly entire surface of the intake surface of the first side wall 1110. The body 1100 further includes a second side wall 1120 provided with an exhaust surface 1121 having a plurality of exhaust holes over the nearly entire surface of the exhaust surface 1121. When a cooling fan that is provided within the body 1100 is driven, air flows in through the intake holes of the intake surface and out through the exhaust holes of the exhaust surface 1121. The body 1100 further includes a right side wall 1130 formed with a sound pickup hole 1131. Through the sound pickup hole 1131, a microphone 114 (FIG. 3) of the communication terminal 10 is able to catch sounds such as human voice or any sound including noise.

The body 1100 has an operation panel 1150, which is provided at a front surface toward the right side wall 1130. The operation panel 1150 includes a plurality of operation keys 108a to 108e ("the operation key 108"), a power switch 109, an alarm lamp 119, and a plurality of sound output holes 1151. Through the sound output holes 1151, a speaker 115 (FIG. 3) of the terminal 10 is able to output sounds such as sounds generated based on human voice. The body 1100 further includes a holder 1160, which is provided at the front surface toward the left side wall 1140. The holder 1160, which has a concave shape, accommodates therein the arm 1200 and the camera housing 1300. The right side wall 1130 is further provided with a plurality of connection ports 1132a to 1132c ("connection ports 1132"). The connection ports 1132 allow electrical connection to an external device through an outside device connection I/F 118 (FIG. 3). The body 1100 further includes a left side wall 1140, which is provided with a connection port to connect an external display 120 to a display I/F 117 (FIG 3) through a cable 120c.

The arm 1200 is fixed to the body 1100 via a torque hinge 1210. With the torque hinge 1210, the arm 1200 can be rotated in directions of up and down with respect to the body, while making a tilt angle θ1 of up to 135 degrees. FIG. 2 illustrates the case where the tilt angle θ1 is 90 degrees.

The camera housing 1300 incorporates therein a camera 112 (FIG. 3) that takes an image of an object. The object may be a part of a user, document, or a room where the terminal 10 is located. The camera housing 1300 is provided with a torque hinge 1310. The camera housing 1300 is fixed to the arm 1200 through the torque hinge 1310. With the torque hinge 1310, the camera housing 1300 can be rotated with respect to the arm 1200, in the direction of up, down, right, and left, such that the camera housing 1300 is kept at a desired position. More specifically, the camera housing 1300 can be rotated, while making a pan angle θ2 from about -180 degrees to 180 degrees in the direction right and left, and a tilt angle θ3 that ranges from about -45 degrees to +45 degrees in the direction of up and down. In FIG. 2, the pan angle θ2 and the tilt angle θ3 are each 0 degree.

In this example, the communication terminal 10, which is implemented by the videoconference apparatus, has the outer appearance as illustrated in FIG. 2. When the communication terminal 10 is implemented as the other device such as a general-purpose computer, a smart phone, or a tablet computer, the communication terminal 10 has a different outer appearance. Further, the camera or the microphone does not have to be incorporated into the body of the communication terminal 10, such that any camera or microphone may be connected to the body of the communication terminal 10.

The application management system 30 and the communication management system 50 are each implemented by a general-purpose computer such as a personal computer or a server computer. Further, any number of computers, which may be provided on the same network or different networks, may be used to function as the application management system 30 or the communication management system 50. For simplicity, explanation of the outer appearance of the computer is omitted.

In this example, the communication terminal 70 is implemented by the smart phone so that explanation of the outer appearance of the second communication terminal 70 is omitted.

FIG 3 is a schematic block diagram illustrating a hardware structure of the communication terminal 10. As illustrated in FIG. 3, the terminal 10 includes a central processing unit (CPU) 101, a read only memory (ROM) 102, a random access memory (RAM) 103, a flash memory 104, a solid state drive (SSD) 105, a medium drive 107, the operation key 108, the power switch 109, network interface (I/F) 111, the camera 112, an imaging element interface (I/F) 113, the microphone 114, the speaker 115, a sound input/output interface (I/O I/F) 116, the display interface (I/F) 117, the outside device connection interface (I/F) 118, and the alarm lamp 119, which are electrically connected through a bus 110 such as an address bus or data bus. The CPU 101 controls entire operation of the terminal 10. The ROM 102 stores therein a control program for execution by the CPU 101, such as an initial program loader (IPL). The RAM 103 functions as a work area for the CPU 101. The flash memory 104 stores therein various data such as the terminal control program, image data, or sound data such as voice data. The SSD 105 controls reading or writing of various data with respect to the flash memory 104 under control of the CPU 101. The medium drive 107 controls reading or writing of various data with respect to a removable recording medium 106 such as a flash memory. The operation key 108 allows the user to input a user instruction, for example, by allowing the user to select a communication destination such as the counterpart terminal. The power switch 109 allows the user to switch on or off the power of the terminal 10. The network I/F 111 allows the terminal 10 to transmit data through the communications network 2.

The camera 112 takes an image of an object to obtain image data under control of the CPU 101. The imaging element I/F 113 controls operation of the camera 112. The microphone 114 catches sounds such as voice of the user at the terminal 10. The speaker 115 outputs sounds such as sounds generated based on voice of the user at the counterpart terminal. The sound I/O I/F 116 controls input or output of sound signals such as voice signals with respect to the microphone 114 and the speaker 115 under control of the CPU 101. The display I/F 117 transmits image data to the display 120 under control of the CPU 101. The outside device connection I/F 118 controls connection of the terminal 10 to various types of outside device. The alarm lamp 119 generates notification when an error is detected in the terminal 10.

The display 120 may be implemented by a liquid crystal display (LCD) or an organic light emitting display, which displays various data such as an image of an object or an operation icon. As illustrated in FIGs. 2 and 3, the display 120 is connected to the display I/F 117 through the cable 120c. The cable 120c may be implemented by an analog RCB (VGA) signal cable, a component video cable, a high-definition multimedia interface (HDMI) signal cable, or a digital video interactive (DVI) signal cable.

The camera 112 includes a plurality of devices such as a lens system, and a solid-state image sensing device that photo-electrically converts a light to generate an image of an object. For example, the solid-state image sensing device includes a complementary metal oxide semiconductor (CMOS) or a charge coupled device (CCD).

The outside device connection I/F 118 may be connected to an outside device such as an external camera, external microphone, or external speaker through a universal serial bus (USB) cable that is connected through the port 1132 of the body 1100 (FIG. 2). When the external camera is connected to the terminal 10, the CPU 101 causes the terminal 10 to capture an image using the external camera, rather than the camera 112 that is incorporated in the terminal 10. When the external microphone or the external speaker is connected to the terminal 10, the CPU 101 causes the terminal 10 to use the external microphone or the external speaker in place of the incorporated microphone 114 or the incorporated speaker 115.

The recording medium 106, which can be freely attached to or detached from the terminal 10, includes any desired type of recording medium. In alternative to the flash memory 104, any nonvolatile memory that is readable and writable under control of the CPU 101 may be used such as Electrically Erasable and Programmable ROM (EEPROM).

In this example, the terminal 10 is provided with the camera 112, the microphone 114, and the speaker 115. Alternatively, the terminal 10 may not be provided with any one of the camera 112, the microphone 114, and the speaker 115. For example, the outside device connection I/F 118 may connect with the outside device that functions any one of the camera 112, the microphone 114, and the speaker 115, to provide the functions of the camera 112, the microphone 114, and the speaker 115.

The terminal control program may be written onto a recording medium that is readable by a general-purpose computer such as the recording medium 106 in any format that is installable or executable by a general-purpose computer. Once the terminal control program is written onto the recording medium, the recording medium may be distributed. Further, the terminal control program may be stored in any desired memory other than the flash memory 104, such as the ROM 102.

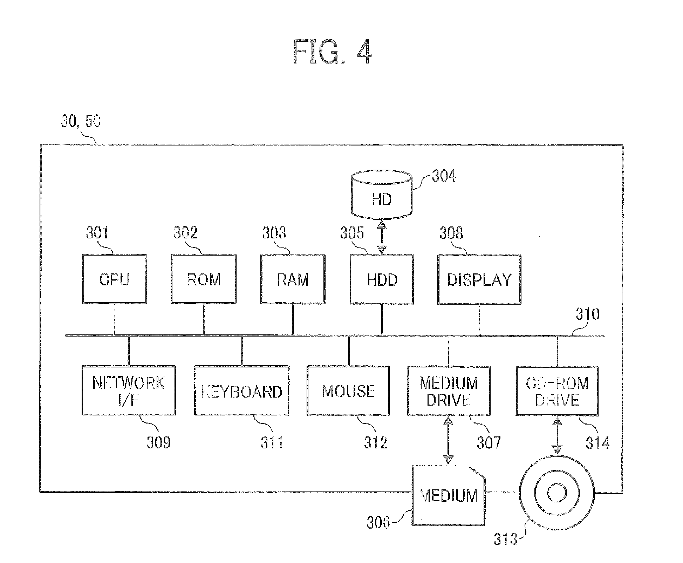

FIG. 4 illustrates a hardware structure of the application management system 30 of FIG. 1. The application management system 30 includes a CPU 301, a ROM 302, a RAM 303, a hard disk (HD) 304, a hard disk drive (HDD) 305, a medium drive 307, a display 308, a network interface (I/F) 3 09, a keyboard 311, a mouse 312, and a CD-ROM drive 314, which are electrically connected through a bus 310 such as an address bus or a data bus.

The CPU 301 controls entire operation of the management system 50. The ROM 302 stores a control program for execution by the CPU 301, such as an IPL. The RAM 303 functions as a work area for the CPU 301. The HD 304 stores therein various data such as the application management program. The HDD 305 controls reading or writing of various data with respect to the HD 304 under control of the CPU 301. The medium drive 307 controls reading or writing of various data with respect to a removable recording medium 306 such as a flash memory. The display 308 displays various data such as a cursor, menu, window, character, or image. The network I/F 309 allows the application management system 30 to transmit data through the communications network 2. The keyboard 311 includes a plurality of keys, each of which is used for inputting a user instruction through a character, a numeral, or a symbol. The mouse 312 allows the user to input a user instruction including, for example, selection or execution of a specific instruction, selection of an area to be processed, and instruction of cursor movement. The CD-ROM drive 314 controls reading or writing of various data with respect to a CD-ROM 313. In alternative to the CD-ROM 313, any removable recording medium may be used.

The application management program may be written onto a recording medium that is readable by a general-purpose computer such as the recording medium 306 or the CD-ROM 313 in any format that is installable or executable by a general-purpose computer. Once the application management program is written onto the recording medium, the recording medium may be distributed. Further, the application management program may be stored in any desired memory other than the HD 304, such as the ROM 302.

The communication management system 50 is substantially similar in hardware structure to the application management system 30 of FIG. 4, except for replacement of the application management program with a communication management program that is used for controlling the communication management apparatus 50. The communication management program may be written onto a recording medium that is readable by a general-purpose computer such as the recording medium 306 or the CD-ROM 313 in any format that is installable or executable by the general-purpose computer. Once the communication management program is written onto the recording medium, the recording medium may be distributed. Further, the communication management program may be stored in any desired memory other than the HD 304, such as the ROM 302.

Other examples of removable recording medium, which may be used in place of the CD-ROM 313, include, but not limited to, compact disc recordable (CD-R), digital versatile disk (DVD), and blue ray disc.

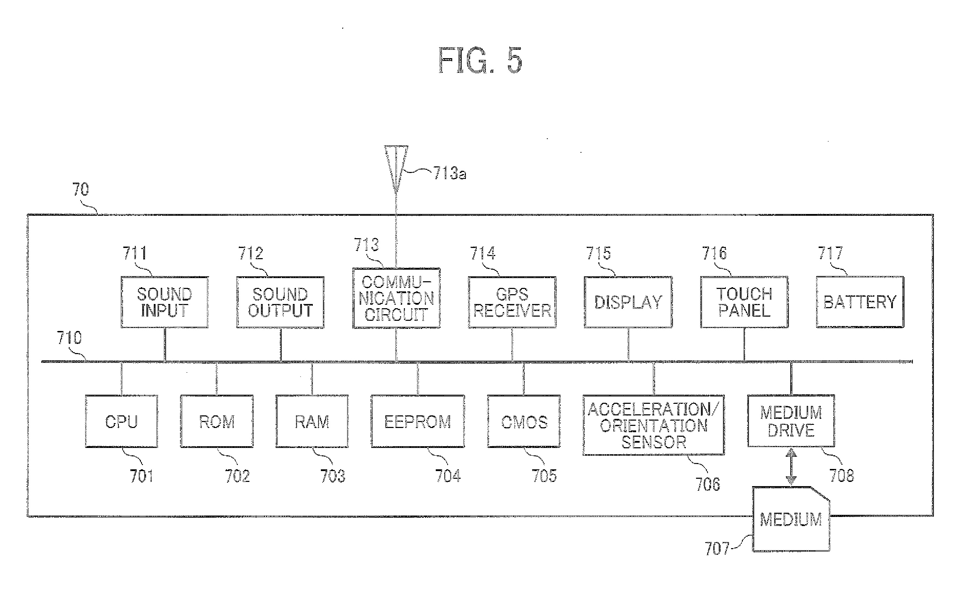

FIG. 5 illustrates a hardware structure of the communication terminal 70, which is implemented by the smart phone. As illustrated in FIG. 5, the terminal 70 includes a CPU 701, a ROM 702, a RAM 703, an Electrically Erasable and Programmable ROM (EEPROM) 704, a Complementary Metal Oxide Semiconductor (CMOS) sensor 705, an acceleration/orientation sensor 706. a medium drive 708, a sound input device 711, a sound output device 712, a communication circuit 713 with an antenna 713a, a GPS receiver 714, a display 715, and a touch panel 716, which are electrically connected through a bus 710 such as an address bus or a data bus.

The CPU 701 controls entire operation of the communication terminal 70. The ROM 702 stores a control program for execution by the CPU 701, such as a basic input/output program. The RAM 703 functions as a work area for the CPU 701. The EEPROM 704 controls reading or writing of various data under control of the CPU 701.

The CMOS sensor 705 captures an object to obtain image data under control of the CPU 701. The acceleration/orientation sensor 706 may be implemented by an electromagnetic compass that detects terrestrial magnetism, a gyrocompass, and/or an accelerator. The medium drive 708 controls reading or writing of various data with respect to a removable recording medium 707 such as a flash memory. The recording medium 707 can be freely attached to or removed from the communication terminal 70.

The EEPROM 704 stores various data such as the operating system (OS) and other applications for execution by the CPU 701, and various other data. The CMOS sensor 705 is an example of charged coupled device that photo-electrically converts a light to generate an image of an object. In alternative to the CMOS sensor 705, a charged coupled device (CCD) sensor may be used.

The sound input device 711 converts sounds such as human voices to a sound signal for transmission to the communications network 2. The sound input device 711 includes, for example, a microphone that inputs sounds, a converter, and an interface. The sound output device 712 converts a sound signal to sounds for output to the user. The sound output device 712 includes, for example, a converter, an interface, and a speaker that outputs sounds. The communication circuit 713 communicates with the base station 2a that is found, for example, in neighborhood, using a wireless communication signal that is transmitted or received through the antenna 713a. The GPS receiver 714 receives a GPS signal from the GPS satellite. The display 715 may be implemented by a liquid crystal display (LCD) or an organic light emitting display, which displays various data such as an image of an object or an operation icon. The touch panel 716, which is integrated into the display 715, detects a position on the display 715, which is touched by one or more fingers of a user or an intermediate device such as a touch pen. Examples of the touch panel 716 include a pressure-sensitive touch panel and an electrostatic touch panel.

The communication terminal 70 is further provided with a battery 717, which is a dedicated battery for driving the communication terminal 70.

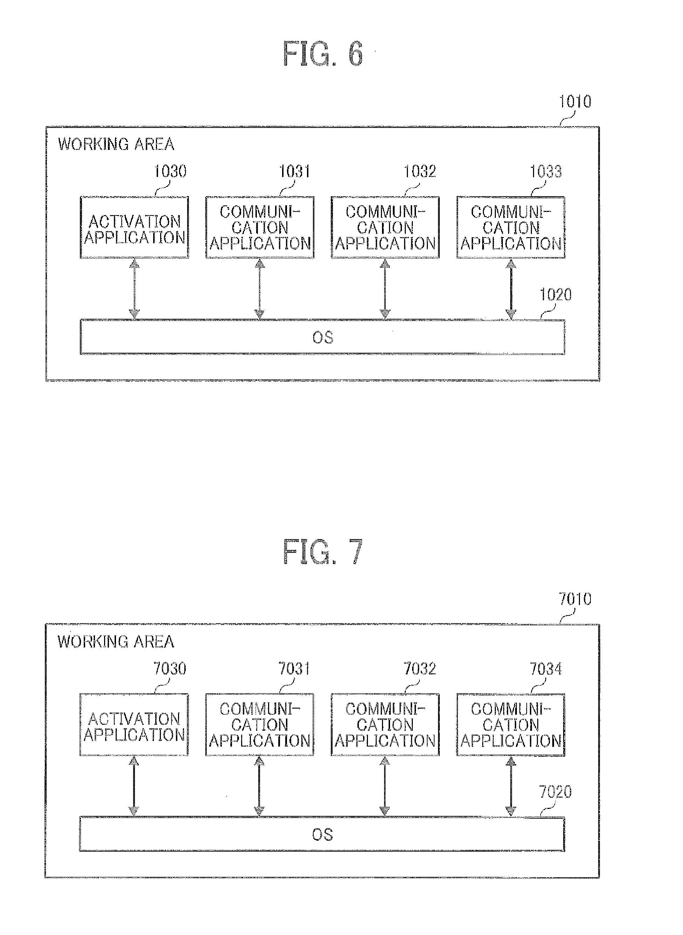

FIG. 6 illustrates a software configuration of the communication terminal 10. As illustrated in FIG. 6, the CPU 101 loads an operation system (OS) 1020, an activation application 1030, and communication applications 1031, 1032, and 1033, onto a work area 1010 of the RAM 103. The OS 1020 is basic software that manages entire operation of the communication terminal 10, through providing basic functions. The activation application 1030 controls activation of the communication applications 1031, 1032, and 1033. The communication applications 1031, 1032, and 1033 each allows the terminal 10 to communicate with the other communication terminal. In this example, the communication applications 1031, 1032, and 1033 use different communication protocols.

FIG. 7 illustrates a software configuration of the communication terminal 70. As illustrated in FIG. 7, the CPU 701 loads an OS 7020, an activation application 7030, and communication applications 7031, 7032, and 7034 onto a work area 7010 of the RAM 703. The OS 7020 is basic software that manages entire operation of the communication terminal 70, through providing basic functions. The activation application 7030 controls activation of the communication applications 7031, 7032, and 7034. The communication applications 7031, 7032, and 7034 each allows the terminal 70 to communicate with the other communication terminal. In this example, the communication applications 7031, 7032, and 7034 use different communication protocols.

In this example, the communication application 1031 and the communication application 7031 both use the same communication protocol. The communication application 1032 and the communication application 7032 both use the same communication protocol. The communication application 1033 and the communication application 7034 use communication protocols different from each other.

Examples of communication protocol use by any one of the activation applications and the communication applications described above include, but not limited to, (1) session initial protocol (SIP), (2) H.323, (3) the expended SIP, (4) Instant Messenger (IM) Protocol such as extensible messaging and presence protocol (XMPP), ICQ (Registered Trademark), AIM (Registered Trademark), or Skype (Registered Trademark), (5) protocol using the SIP message method, (6) Internet relay chat (IRC) protocol, and (7) extended IM based protocol such as Jingle.

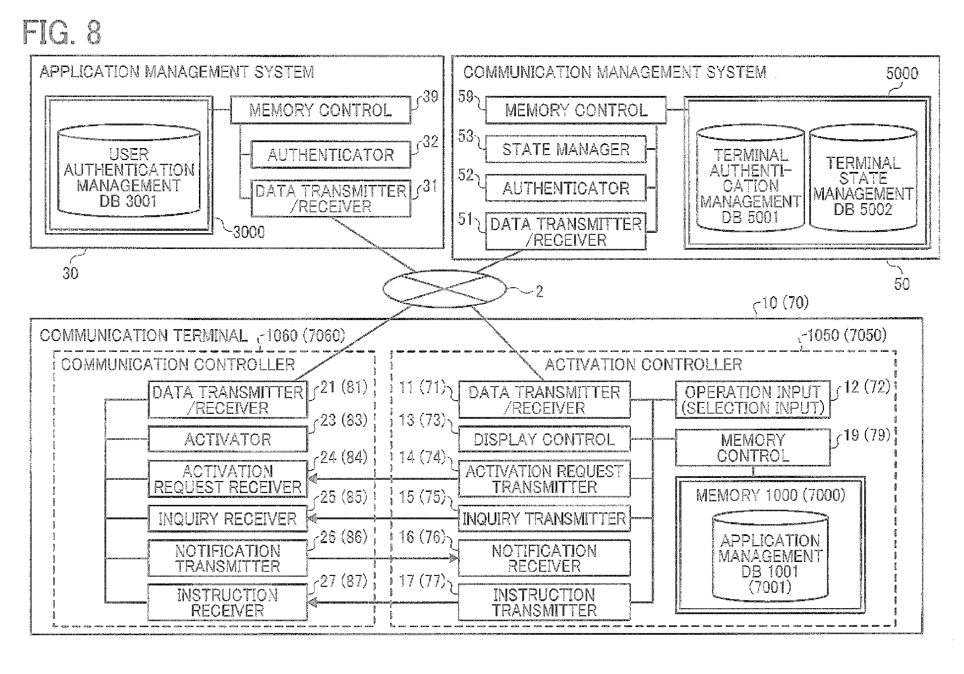

FIG. 8 is a schematic block diagram illustrating a functional structure of the communication terminal 10, the application management system 30, the communication management system 50, and the communication terminal 70, according to an example embodiment of the present invention. In FIG 8, at least two of the communication terminal 10, the application management system 30, the communication management system 50, and the communication terminal 70 communicate with each other through the communications network 2. While the communication terminal 10 and the communication terminal 70 are different in hardware structure as illustrated in FIGs. 3 and 5, in this example, the communication terminal 10 and the communication terminal 70 are substantially the same in functional structure. For simplicity, the numeral in parenthesis indicates a functional element of the communication terminal 70.

The communication terminal 10 includes an activation controller 1050 and a communication controller 1060. As illustrated in FIG. 6, the activation application 1030 operates as the activation controller 1050. Any one of the communication applications 1031, 1032, and 1033 of FIG. 6 may function as the communication controller 1060.

The activation controller 1050 includes a data transmitter/receiver 11, an operation input 12, a display control 13, an activation request transmitter 14, an inquiry transmitter 15, a notification receiver 16, an instruction transmitter 17, and a memory control 19. These elements shown in FIG. 8 correspond to functions, which are performed by any one of the hardware elements of FIG. 3 in response to the instructions that are generated by the CPU 101 according to the activation application 1030 that is deployed on the RAM 103 from the flash memory 104.

The communication controller 1060 includes a data transmitter/receiver 21, an activator 23, an activation request receiver 24, an inquiry receiver 25, a notification transmitter 26, and an instruction receiver 27. These elements shown in FIG. 8 correspond to functions, which are performed by any one of the hardware elements of FIG. 3 in response to the instructions that are generated by the CPU 101 according to the communication application 1031, 1032, or 1033 that is deployed on the RAM 103 from the flash memory 104.

The communication terminal 10 further includes a memory 1000, which may be any one of the ROM 102, RAM 103, and flash memory 104 of FIG. 3. The memory 1000 stores therein an application management database (DB) 1001.

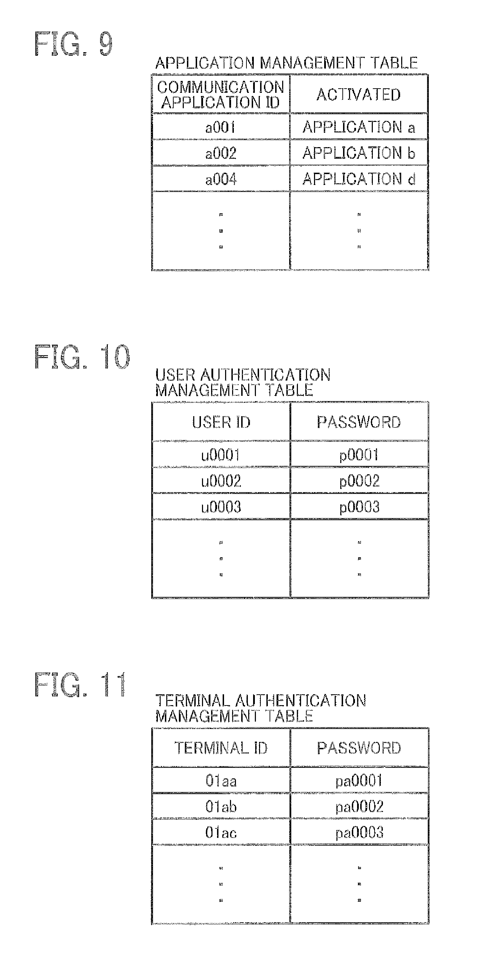

FIG. 9 illustrates an example data structure of the application management table, which is one example of the application management DB 1001. The application management table stores a communication application identification (ID) for identifying a communication application, and a subject for activation ("activated") that the activation application 1030 executes to activate that communication application, in association with each other. For example, the subject for activation may be an address that identifies an execution file of the communication application to be activated by the activation application 1030.

Referring now to FIGS. 3 and 8, a functional structure of the activation controller 1050 of the communication terminal 10 is explained according to an example embodiment of the present invention. In this example, the operations or functions that are performed by the terminal 10, which include the operations or functions performed by the functional elements shown in FIG. 8, are performed in cooperation with one or more hardware devices of the terminal 10 that are shown in FIG. 3. More specifically, these elements shown in FIG. 8 correspond to a plurality of functions or functional modules, which are executed according to an instruction of the CPU 101 (FIG. 3) that is generated according to the activation application 1030 being loaded from the flash memory 104 onto the RAM 103.

The data transmitter/receiver 11 of the communication terminal 10, which may be implemented by the network I/F 111 under control of the CPU 101 (FIG. 3), transmits or receives various data or information to or from another communication terminal, device, or system, through the communications network 2.

The operation input 12 may be implemented by such as the operation key 108 or the power switch 109 under control of the instructions received from the CPU 101. The operation input 12 receives a user instruction input by the user, through the operation key 108 or the power switch 109, such as a user selection. For example, when the user selects "ON" using the power switch 109, the operation input 12 (FIG. 8) receives a user instruction for turning the power on, and causes the terminal 10 to turn on the power. When the power is turned on, the activation application 1030 may be activated to operate as the activation controller 1050.

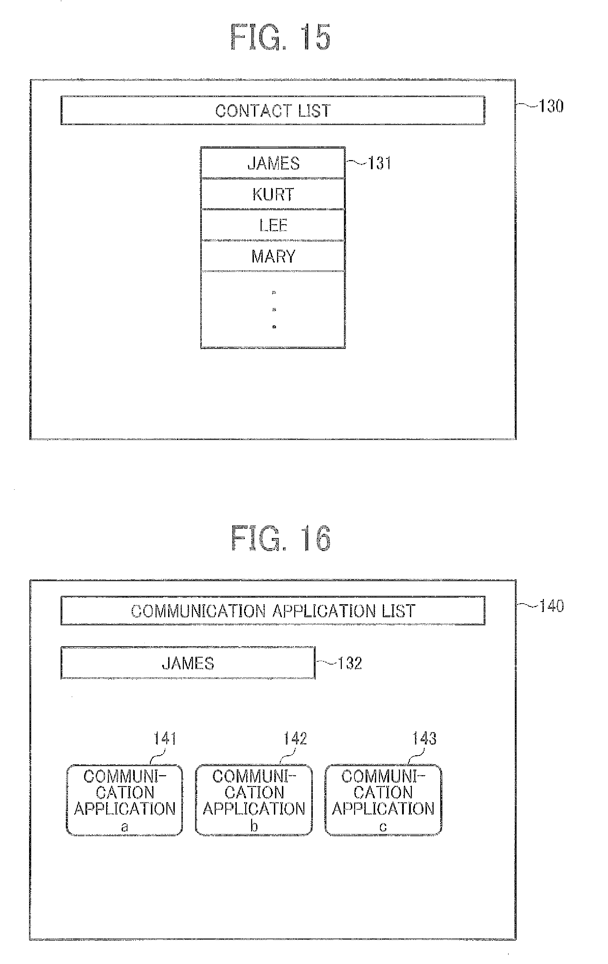

The display control 13, which may be implemented by the display I/F 117 under control of the instructions received from the CPU 101, controls transmission of image data to the display 120, based on data received from the counterpart communication terminal. The display control 13 further causes the display 120 to display a contact list screen as illustrated in FIG. 15, or a communication application list screen as illustrated in FIG. 16.

The activation request transmitter 14, which may be implemented by the instructions received from the CPU 101 (FIG. 3), transmits an activation request to the communication application identified by the communication application ID received at the data transmitter/receiver 11.

The inquiry transmitter 15, which may be implemented by the instructions received from the CPU 101 (FIG. 3), transmits an inquiry to the communication application identified by the activation request transmitter 14 to determine whether preparation for communication is completed, for example, when a predetermined time period elapses after the request for activating the communication application is transmitted from the activation request transmitter 14 to the communication application. The predetermined time period is previously set based on a time period that is required for the communication application to be activated and complete the login process including the authentication process with the application management system 30. For example, the predetermined time period may be set to 5 seconds.

The notification receiver 16, which may be implemented by the instructions received from the CPU 101 (FIG. 3), receives notification or any information indicating that preparation for communication is completed, from the communication controller 1060. More specifically, the communication application, which performs the function of the communication controller 1060, sends notification in response to the inquiry received from the inquiry transmitter 15.

The instruction transmitter 17, which may be implemented by the instructions received from the CPU 101 (FIG. 3), instructs the communication controller 1060 to start communication.

The memory control 19, which may be implemented by the instructions received from the CPU 101 that may operate in cooperation with the SSD 105, stores or reads various data with respect to the memory 1000. In one example, the memory control 19 may identify a subject for activation, for example, by searching through the application management table of FIG. 9 using the communication application ID received at the data transmitter/receiver 11 as a search key.

Still referring to FIGs. 3 and 8, a functional structure of the communication controller 1060 of the communication terminal 10 is explained according to an example embodiment of the present invention. More specifically, in this example, the operations or functions performed by the terminal 10, which include the operations or functions performed by the elements shown in FIG. 8, are performed in cooperation with one or more hardware devices of the terminal 10 that are shown in FIG 3. More specifically, these elements shown in FIG. 8 correspond to a plurality of functions or functional modules, which are executed according to an instruction of the CPU 101 (FIG. 3) that is generated according to the communication application 1031, 1032, or 1033 being loaded from the flash memory 104 onto the RAM 103.

The data transmitter/receiver 21, which may be implemented by the network I/F 111 under control of the CPU 101 (FIG. 3), transmits or receives various data or information to or from another communication terminal, device, or system, through the communications network 2.

The activation request receiver 24, which may be implemented by the instructions received from the CPU 101 (FIG. 3), receives the activation request from the activation request transmitter 14 of the activation controller 1050.

The activator 23, which may be implemented by the instructions received from the CPU 101 (FIG. 3), activates the communication application 1031, 1032, or 1033 that functions as the communication controller 1060 in response to the activation request received at the activation request receiver 24.

The inquiry receiver 25, which may be implemented by the instructions received from the CPU 101 (FIG. 3), receives the inquiry that asks whether preparation for communication is completed, from the inquiry transmitter 15 of the activation controller 1050.

The notification transmitter 26, which may be implemented by the instructions received from the CPU 101 (FIG. 3), transmits notification indicating that preparation for communication is completed, to the notification receiver 16 of the activation controller 1050.

The instruction receiver 27, which may be implemented by the instructions received from the CPU 101 (FIG. 3), receives the request for starting communication, from the instruction transmitter 17 of the activation controller 1050.

Still referring to FIG. 8, a functional structure of the application management system 30 is explained. The application management system 30 includes a data transmitter/receiver 31, an authenticator 32, and a memory control 39. More specifically, these elements shown in FIG 8 correspond to a plurality of functions or functional modules, which are executed according to an instruction of the CPU 301 (FIG. 4) that is generated according to the application management program being loaded from the HD 304 onto the RAM 303.

The application management system 30 further includes a memory 3000, which may be implemented by the ROM 302, RAM 303, or HD 304 (FIG. 4). The memory 3000 stores a user authentication management DB 3001, such as a user authentication management table of FIG. 10.

FIG. 10 illustrates an example data structure of the user authentication management table. The user authentication management table stores a user identification (ID) for identifying a user who may use the communication application in the communication system 1, and a password, in association with each other. The authentication information regarding the user is previously registered in the application management system 30, so as to allow the registered user to use the communication application available in the communication system 1.

Now, a functional structure of the management system 30 is explained according to an example embodiment of the present invention. In this example, the operations or functions that are performed by the application management system 30, which include the operations or functions performed by the elements shown in FIG. 8, are performed in cooperation with one or more hardware devices of the application management system 30 that are shown in FIG. 4. More specifically, these elements shown in FIG. 8 correspond to a plurality of functions or functional modules, which are executed according to an instruction of the CPU 301 (FIG. 4) that is generated according to the application management program being loaded from the HD 304 onto the RAM 303.

The data transmitter/receiver 31 of the application management system 3 0, which may be implemented by the network I/F 309 under control of the instructions received from the CPU 301 (FIG 4), transmits or receives various data or information to or from another communication terminal, device, or system, through the communications network 2, in communication protocol compatible with a communication application that the application management system 30 manages.

The authenticator 32, which may be implemented by the instructions received from the CPU 301 (FIG. 4), searches the user authentication management table (FIG 10) using the user ID and the password that are received from the data transmitter/receiver 31 as a search key, to determine whether a user ID and a password that match the received user ID and password are stored in the user authentication management table. Based on a match, the authenticator 32 generates a user authentication result indicating whether the user associated with the received user ID and password is allowed for access. For example, the application management system 30 previously registers the user, who is allowed to use specific communication application subject for management by the application management system 30, by storing the user ID and the password in the user authentication management table of FIG 10.

The memory control 39, which may be implemented by the instructions received from the CPU 301 that may operate in cooperation with the HDD 305, stores or reads various data with respect to the memory 3 000.

Still referring to FIG. 8, a functional structure of the communication management system 50 is explained. The communication management system 50 includes a data transmitter/receiver 51, an authenticator 52, a state manager 53, and a memory control 59. These elements shown in FIG. 8 correspond to a plurality of functions or functional modules, which are executed according to an instruction of the CPU 301 (FIG. 4) that is generated according to the communication management program being loaded from the HD 304 onto the RAM 303.

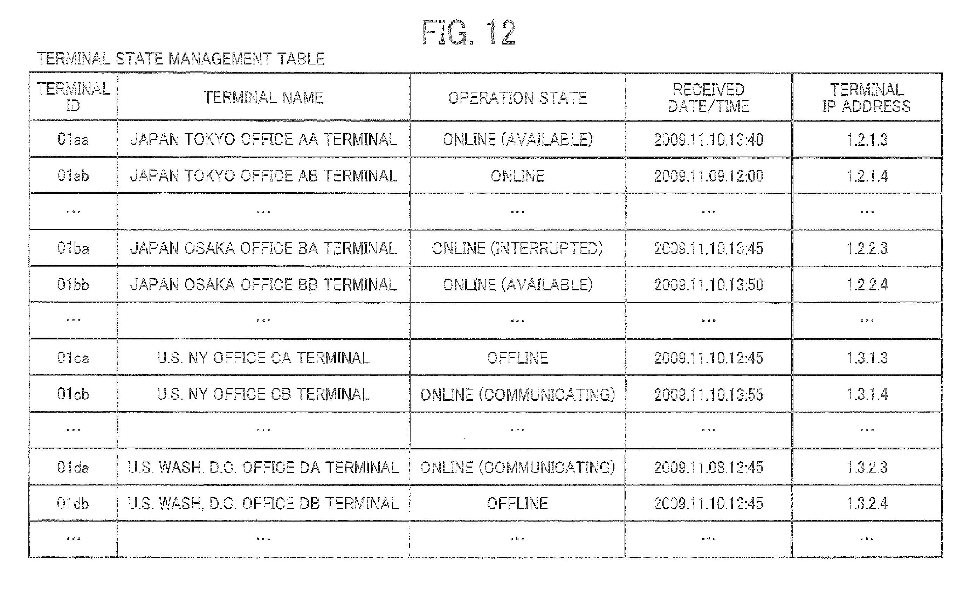

The communication management system 50 further includes a memory 5000, which may be implemented by, for example, the HD 304 (FIG 4). The memory 5000 stores therein a terminal authentication management DB 5001 such as a terminal authentication management table of FIG. 11, and a terminal state management DB 5002 such as a terminal state management table of FIG. 12.

FIG. 11 illustrates an example data structure of the terminal authentication management table. The terminal authentication management table stores a terminal identification (ID) for identifying the communication terminal, and a password assigned for the communication terminal, in association with each other. The terminal ID may be previously stored in a memory of the communication terminal, or may be stored according to a user input to the communication terminal.

FIG 12 illustrates an example data structure of the terminal state management table. The terminal state management table stores, for each of the terminal IDs of the communication terminals, a terminal name, an operation state of the terminal, the date/time at which a login request is received at the communication management system 50 from the terminal, and a terminal IP address assigned to the terminal. The operation state indicates, for example, whether the communication terminal is online or offline. The "online" operation state further indicates whether the communication terminal is available for communication ("available"), the communication terminal is interrupted from communication ("interrupted"), or the communication terminal is currently communicating with the counterpart terminal ("communicating").

Now, a functional structure of the communication management system 50 is explained according to an example embodiment of the present invention. These elements shown in FIG 8 correspond to a plurality of functions or functional modules, which are executed according to an instruction of the CPU 301 (FIG. 4) that is generated according to the communication management program being loaded from the HD 304 onto the RAM 303.

The data transmitter/receiver 51, which may be implemented by the network I/F 309 under control of the instructions received from the CPU 301 (FIG. 4), transmits or receives various data or information to or from another communication terminal, device, or system, through the communications network 2.

The authenticator 52, which may be implemented by the instructions received from the CPU 301 (FIG. 4), searches the terminal authentication management table of FIG. 11, using the terminal ID and the password received at the data transmitter/receiver 51 as a search key to determine whether a terminal ID and a password that match the received terminal ID and password are stored in the terminal authentication management table of FIG. 11. Based on a match, the authenticator 52 generates a terminal authentication result indicating whether the terminal is allowed for access.

The state manager 53, which may be implemented by the instructions received from the CPU 301 (FIG. 4), manages various information stored in the terminal state management table of FIG. 12. More specifically, the state manager 53 stores the operation state of the terminal, the date/time at which the login request is received at the communication management system 50, and the IP address of the communication terminal, in association with the terminal ID and the terminal name of the communication terminal.

The memory control 39, which may be implemented by the instructions received from the CPU 301 that may operate in cooperation with the HDD 305 (FIG 4), stores or reads various data with respect to the memory 3000.

Still referring to FIG. 8, a functional structure of the communication terminal 70 is explained. The communication terminal 70 includes an activation controller 7050 and a communication controller 7060, which are substantially similar in function to the activation controller 1050 and the communication controller 1060. More specifically, the activation controller 7050 includes a data transmitter/receiver 71, an operation input 72, a display control 73, an activation request transmitter 74, an inquiry transmitter 75, a notification receiver 76, an instruction transmitter 77, and a memory control 79. The communication controller 7060 includes a data transmitter/receiver 81, an activator 83, an activation request receiver 84, an inquiry receiver 85, a notification transmitter 86, and an instruction receiver 87. Since these elements are substantially similar in function to the above-described elements of the communication terminal 10, explanation thereof is omitted.

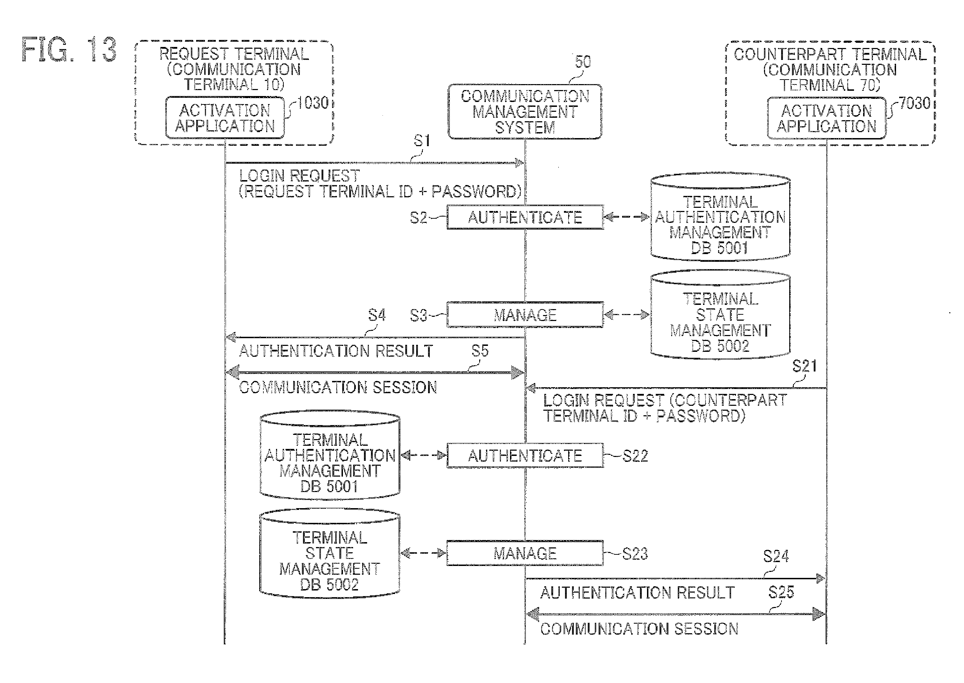

Referring now to FIGs. 13 to 18, operation of communicating between the communication terminals is explained according to an example embodiment of the present invention. In this example, the communication terminal 10 is a request communication terminal that requests for starting communication, and it may be referred to as the request terminal 10. The communication terminal 70 is a counterpart communication terminal that accepts the communication request from the request terminal 10, and it may be referred to as the counterpart terminal 70.

FIG. 13 is a data sequence diagram illustrating operation of preparing for communication, which includes a sequence of processes from logging into the communication system 1 to establish a communication session between the terminal and the communication management system 50.

At S1, the activation application 1030 at the request terminal 10 transmits a login request (login request information) to the communication management system 50 through the data transmitter/receiver 11. The login request information includes a terminal ID and a password of the request terminal 10. The communication management system 50 receives the login request information that includes the terminal ID and the password of the request terminal 10, at the data transmitter/receiver 51.

At S2, the authenticator 52 of the communication management system 50 determiners whether the terminal authentication management table of FIG 11 stores a set of terminal ID and password, which matches a set of terminal ID and password that is received from the request terminal 10 at the data transmitter/receiver 51 at S1. When there is a set of terminal ID and password that matches the received set of terminal ID and password, the authenticator 52 authenticates the request terminal 10. When the request terminal 10 is authenticated as a terminal that is allowed for access, at S3, the state manager 53 refers to the terminal state management table of FIG. 12 to specify the terminal ID of the authenticated request terminal 10, and updates the operation state, the received date/time, and the IP address of the request terminal 10. In this example, the terminal IP address is received with the login request information, which is transmitted from the request terminal 10. For example, the state manager 53 updates the operation state to "online (available)", and the received date/time to the date/time at which the login request is received, and the terminal IP address to the received terminal IP address.

At 4, the communication management system 5 transmits the authentication result to the activation application 1030 of the request terminal 10, through the data transmitter/receiver 51. The request terminal 10 receives the authentication result at the data transmitter/receiver 11.

When the request terminal 10 is authenticated as a terminal that is allowed for access at S2, at S5, a communication session is established between the activation application 1030 at the request terminal 10 and the communication management system 50 via the communications network 2.

In a substantially similar manner as described above for the case of the request terminal 10, at S21, the activation application 7030 at the counterpart terminal 70 transmits a login request (login request information) to the communication management system 50 through the data transmitter/receiver 71. The login request information includes a terminal ID and a password assigned to the counterpart terminal 70. The communication management system 50 receives the login request information that includes the terminal ID and the password of the counterpart terminal 70, at the data transmitter/receiver 51.

At S22, the authenticator 52 of the communication management system 50 determines whether the terminal authentication management table of FIG 11 stores a set of terminal ID and password, which matches a set of terminal ID and password that is received from the counterpart terminal 70 at the data transmitter/receiver 51. When there is a set of terminal ID and password that matches the received set of terminal ID and password, the authenticator 52 authenticates the counterpart terminal 70. When the counterpart terminal 70 is authenticated as a terminal that is allowed for access, at S23, the state manager 53 refers to the terminal state management table of FIG. 12 to specify the terminal ID of the authenticated counterpart terminal 70, and updates the operation state, the received date/time, and the IP address of the counterpart terminal 70. In this example, the terminal IP address is received with the login request information, which is transmitted from the counterpart terminal 70. For example, the state manager 53 updates the operation state to "online (available)", and the received date/time to the date/time at which the login request is received, and the tenninal IP address to the received terminal IP address.

At S24, the communication management system 50 transmits the authentication result to the activation application 7030 of the counterpart terminal 70, through the data transmitter/receiver 51. The counterpart terminal 70 receives the authentication result at the data transmitter/receiver 11.

When the counterpart terminal 70 is authenticated as a terminal that is allowed for access at S22, at S25, a communication session is established between the activation application 7030 at the counterpart terminal 70 and the communication management system 50 through the communications network 2.

Referring now to FIG: 14, operation of activating the communication application at the request terminal 10 to be ready for communication using the communication application is explained according to an example embodiment of the present invention.

At S41, the activation application 1030 of the request terminal 10, which functions as the activation controller 1050, instructs the display control 13 to display a contact list screen 130 of FIG 15 on the display 120. FIG. 15 is an example screen of a contact list 131 displayed at the display 120 provided for the request terminal 10. For example, the display control 13 displays the contact list screen 130 of FIG. 15 based on contact list information read out from the memory 1000 through the memory control 19. As illustrated in FIG. 15, the contact list screen 130 displays the contact list 131, which lists one or more names of the users that the user at the request terminal 10 can start communication. In this example, the names of the users are displayed. Alternatively, any identification that identifies the user such as a nickname of the user, or any identification that identifies a candidate counterpart terminal such as the terminal name may be displayed.

For example, the contact list may be generated based on contact list information, such as a contact list management table, which stores, for each one of the user IDs for identifying the user, the user name, and the terminal ID of the communication terminal owned by the user.

In alternative to managing the contact list information locally at the communication terminal 10, the communication management system 50 may centrally manage the contact list information, and sends such contact list information to the communication terminal 10 for display.

In response to a user instruction for selecting a user (or a terminal) from the contact list 131 input by the user at the request terminal 10, at S42, the operation input 12 receives the user instruction that selects the user (or the terminal) to start communication, such as the user name. In this example, it is assumed that the user name "James" has been selected. Further, it is assumed that the user with the user name "James" logs in the communication system 1 with the counterpart terminal 70. At this time, the communication terminal 10 may store the user ID or the terminal ID, which is associated with the user name "James" in any desired memory at least temporarily.

At S43, the display control 13 causes the display 120 to display a communication application list screen 140 as illustrated in FIG 16. FIG. 16 illustrates an example screen of the communication application list for display at the request terminal 10. The display control 13 displays the communication application list screen 140, based on information regarding the communication applications available for use, which is obtained from the application management table of FIG. 9 through the memory control 19. The communication application list screen 140 includes a contact display area 132 that displays the user name selected through the contact list screen 130 of FIG. 15, and a plurality of icons 141, 142, and 143 that respectively indicate the available communication applications 1031, 1032, and 1033 based on information obtained from the application management table of FIG. 9.

At S44, when the user selects a desired icon from the icons 141, 142, and 143, for example, using the operation key 108, the operation input 12 at the request terminal 10 receives the user instruction for selecting the communication application indicated by the selected icon. In this example, it is assumed that the icon 141, which corresponds to the communication application 1031, is selected. In such case, the operation input 12 stores the communication application ID "a001", which is associated with the icon 141, in a memory at least temporarily.

At S45, the memory control 19 searches the application management table of FIG. 9 using the communication application ID that identifies the selected communication application, which is obtained at S44, to specify the communication application to be activated. More specifically, the memory control 19 specifies the "application a" as a subject for activation, using the communication application ID "a001".

At S46, the activation application 1030, which functions as the activation controller 1050, instructs the activation request transmitter 14 to transmit an activation request to the communication application 1031, which is identified using the icon 141 corresponding to the communication application "a" at S44. In this example, the activation request includes a user ID that identifies the user at the counterpart terminal 70, which is the user previously selected and displayed in the contact display area 132. Alternatively, at S46, the user ID of the counterpart terminal may not be included in the activation request. The communication application 1031, which functions as the communication controller 1060, receives the activation request at the activation request receiver 24.

At S47, the activator 23 of the communication controller 1060 activates the communication application 1031 to be ready for communication. At S48, the data transmitter/receiver 21 of the communication controller 1060 transmits a login request (login request information) to the application management system 30, through the communications network 2. For example, the communication controller 1060 is programmed to access the corresponding application management system 30, referring to address information of the application management system 30 that is stored in the memory 1000. The login request information includes the user ID for identifying the user of the request terminal 10, and the password, associated with the user ID. The application management system 30 receives the login request information including the user ID and password of the user at the request terminal 10, at the data transmitter/receiver 31.

At S49, the authenticator 32 of the application management system 30 searches the user authentication management table of FIG. 10 using the user ID and the password that are received at the data transmitter/receiver 31 as a search key to determine whether a user ID and a password that match the received user ID and password are stored in the user authentication management table. Based on the match, the authenticator 32 determines whether to authenticate the user. In this example, it is assumed that the user at the request terminal 10 is authenticated.

While FIG. 8 only illustrates one application management system 30, the application management system 30 may be provided in any number, depending on the number of applications or the number of types of applications. For example, assuming that the communication applications 1031, 1032, and 1033 are respectively provided by different providers, there are at least three application management systems 30. Alternatively, assuming that the communication applications 1031 and 1032 are provided by the same provider, there may be two application management systems 30 each corresponding to a specific provider. Depending on the type of application management system 30, the memory 3000 may additionally store any other information such as information regarding a specific application in association with user information regarding a user who is allowed to access such application. For simplicity, in this example, only the application management system 30 for the selected communication application 1031 is shown in FIG. 8.

At S50, the data transmitter/receiver 31 transmits the authentication result to the communication application 1031 of the request terminal 10, which functions as the communication controller 1060. The communication controller 1060 receives the authentication result at the data transmitter/receiver 21.

When a predetermined time period elapses from the time of completing S46, at S51, the activation application 1030, functioning as the activation controller 1050, causes the inquiry transmitter 15 to send an inquiry to ask the communication application 1031 whether preparation for communication completes. More specifically, the communication application 1031 determines that preparation for communication completes, when the login process is successfully performed based on the authentication result received from the application management system 30. The communication application 1031 receives the inquiry from the inquiry transmitter 15 of the activation controller 1050, at the inquiry receiver 25 of the communication controller 1060.

At S52, the communication application 1031, which functions as the communication controller 1060, causes the notification transmitter 26 to send notification indicating that preparation for communication completes, to the activation application 1030. The activation application 1030 receives the notification indicating that preparation for communication completes, at the notification receiver 16 of the activation controller 1050.

At S53, the activation application 1030 of the request terminal 10, which functions as the activation controller 1050, causes the data transmitter/receiver 11 to transmit a request for activating the communication application at the counterpart terminal 70 that is compatible with the selected communication application 1031, to the communication management system 50, The activation request information includes the terminal ID of the request terminal 10, the terminal ID of the counterpart terminal 70, and the communication application ID for identifying the selected communication application 1031. The communication management system 50 receives the activation request, which requests to activate the communication application identified by the communication application ID, at the data transmitter/receiver 51.

In alternative to sending the counterpart terminal ID of the counterpart terminal 70 or the terminal ID of the request terminal 10, the request terminal 10 may send the user ID of the counterpart terminal 70 or the user ID of the request terminal 10.

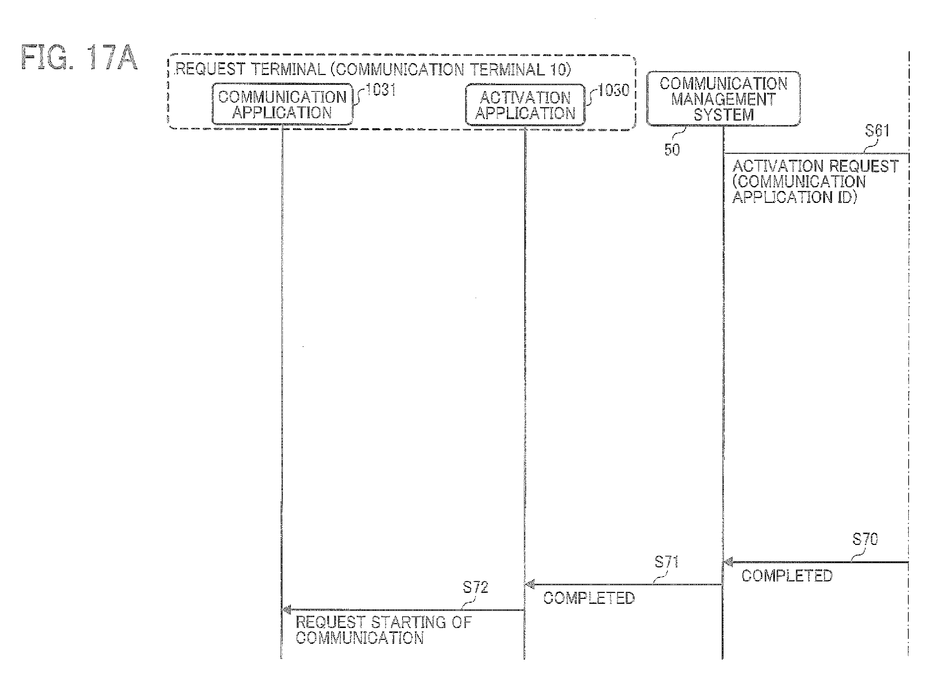

As described above, the communication application 1031 of the request terminal 10 transmits notification indicating that preparation for communication by the communication application 1031. completes, to the activation application 1030 (S52). This indicates that the communication application 1031 is in a waiting state, which waits for communication to be started. This waiting state will be kept, until the time when the communication application 1031 receives an instruction to start communication from the activation application 1030 (S72 of FIG. 17A) based on determination that preparation for communication by the communication application 7031 of the counterpart terminal 70 completes.

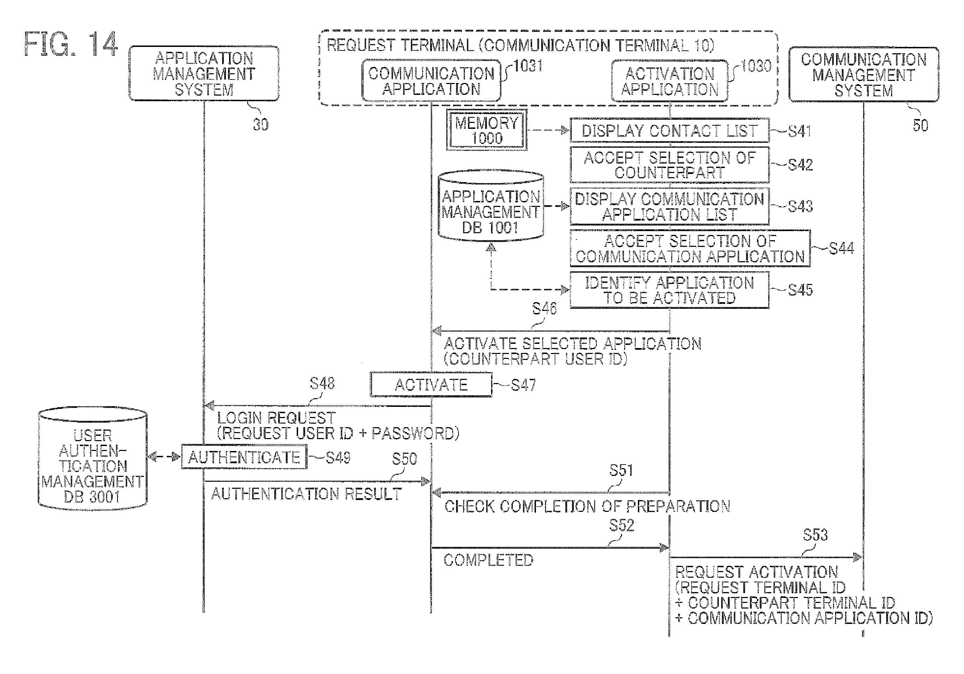

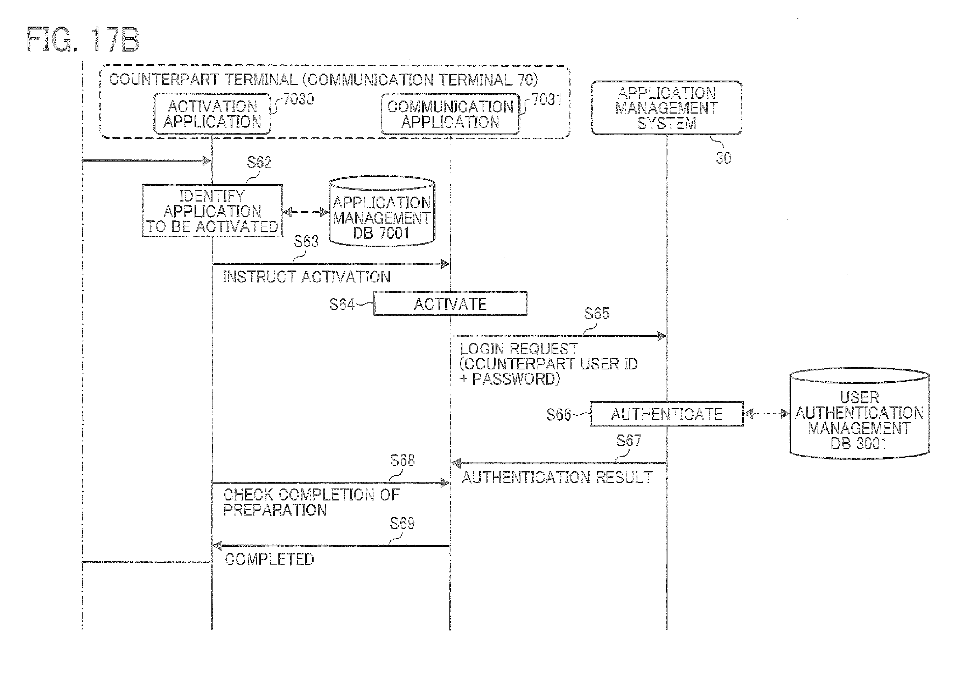

Referring now to FIGs. 17A and 17B, operation of activating the communication application at the counterpart terminal 70 to be ready for communication using the communication application, performed by the communication system 1 of FIG 1, is explained according to an example embodiment of the present invention. More specifically, this operation of FIG. 17 is performed in response to the activation request received at S53 of FIG. 14.

At S61, the data transmitter/receiver 51 of the communication management system 50, which receives the activation request at S53 (FIG. 14), transmits an activation request (activation request information), which requests the counterpart terminal 70 to activate the communication application identified by the communication application ID. The activation request information includes the communication application ID received at S53. More specifically, the communication management system 50 searches the terminal state management table of FIG. 12, using the terminal ID of the counterpart terminal 70 that is received at S53 through the memory control 59 to obtain the IP address of the counterpart terminal 70. The communication management system 50 transmits the activation request that requests for activating the communication application, addressed to this IP address for the counterpart terminal 70.

The activation application 7030 of the counterpart terminal 70, which functions as the activation controller 7050, receives the activation request that requests for activating the communication application identified by the communication application ID, at the data transmitter/receiver 71.

At S62, the activation application 7030, which functions as the activation controller 7050, causes the memory control 79 to search the application management table of FIG. 9 using the communication application ID received at S61 as a search key to identify the subject for activation, that is, the communication application to be activated. In this example, the communication application 7031 assigned with the communication ID of the communication application 1031, is identified.

At S63, the activation request transmitter 74 transmits an activation request to the communication application 7031, which is identified at S62. The communication application 7031, which functions as the communication controller 7060, receives the activation request at the activation request receiver 84.

At S64, the activator 83 activates the communication application 7031 to be ready for communication. At S65, the data transmitter/receiver 81 transmits a login request (login request information) to the application management system 30. As described above for the case of communication terminal 10 in FIG. 14, the application management system 30 may be provided for each type of communication application or each provider. The login request information includes the user ID for identifying the user of the counterpart terminal 70, and the password associated with the user ID. The application management system 30 receives the login request information including the user ID and the password at the data transmitter/receiver 31.

The authenticator 32 of the application management system 30 searches the user authentication management table of FIG. 10 using the user ID and the password, which are received at the data transmitter/receiver 31, as a search key to determine whether the table stores a user ID and a password that match the received user ID and password. Based on a match, the authenticator 32 determines whether to authenticate the user at the coimterpart terminal 70. In this example, it is assumed that the user is authenticated.

At S67, the data transmitter/receiver 31 transmits the authentication result to the communication application 7031 of the counterpart terminal 70. The communication application 7031, that is, the communication controller 7060 receives the authentication result at the data transmitter/receiver 81.

When a predetermined time period elapses from the time when S63 is completed, at S68, the activation application 7030, which functions as the activation controller 7050, causes the inquiry transmitter 75 to send an inquiry to ask the communication application 7031 whether preparation for communication completes. More specifically, the communication application 7031 determines that preparation for communication completes, when the login process is successfully performed. The communication application 7031 functioning as the communication controller 7060 receives the inquiry from the inquiry transmitter 75 of the activation controller 7050, at the inquiry receiver 85.

At S69, the communication application 7031, functioning as the communication controller 7060, causes the notification transmitter 86 to send notification indicating that preparation for communication completes, to the activation application 7030. The activation application 7030, functioning as the activation controller 7050, receives the notification indicating that preparation for communication completes, at the notification receiver 76.

At S70, the data transmitter/receiver 71 of the activation controller 7050 sends notification indicating that preparation for communication completes, to the communication management system 50 through the communications network 2, based on the notification received at S69. The data transmitter/receiver 51 of the communication management system 50 receives the notification indicating that preparation for communication completes.

At S71, the data transmitter/receiver 51 of the communication management system 50 sends notification indicating that preparation for communication completes, to the activation application 1030 of the request terminal 10 through the communications network 2. The activation application 1030, functioning as the activation controller 1050, receives the notification indicating that preparation for communication completes at the data transmitter/receiver 11.

At S5 and S25 (FIG. 13), the communication management system 50 establishes a communication session, respectively, with the communication terminal 10 and the communication terminal 70. Using the terminal ID of the request terminal 10, which is received at S53 (FIG 14), the communication management system 50 searches the terminal state management table of FIG. 12 to extract the IP address of the request terminal 10. With this terminal IP address, the communication management system 50 is able to send the notification to the request terminal 10.

Any one of the above-described messages, such as the activation request at S61 or the notification indicating completion at S70, may include the terminal ID of the request terminal 10 or the terminal ID of the counterpart terminal 70.

At S72, the activation application 1030, which functions as the activation controller 1050, causes the instruction transmitter 17 to instruct the communication application 1031 to start communication. The instruction may include the user ID of the user at the counterpart terminal 70, which is selected at S42 (FIG. 14). For example, when the user ID of the user at the counterpart terminal 70 is already sent to the communication controller 1060, such information does not have to be sent to the communication controller 1060. The communication application 1031, functioning as the communication controller 1060, receives the instruction to start communication at the instruction receiver 27.

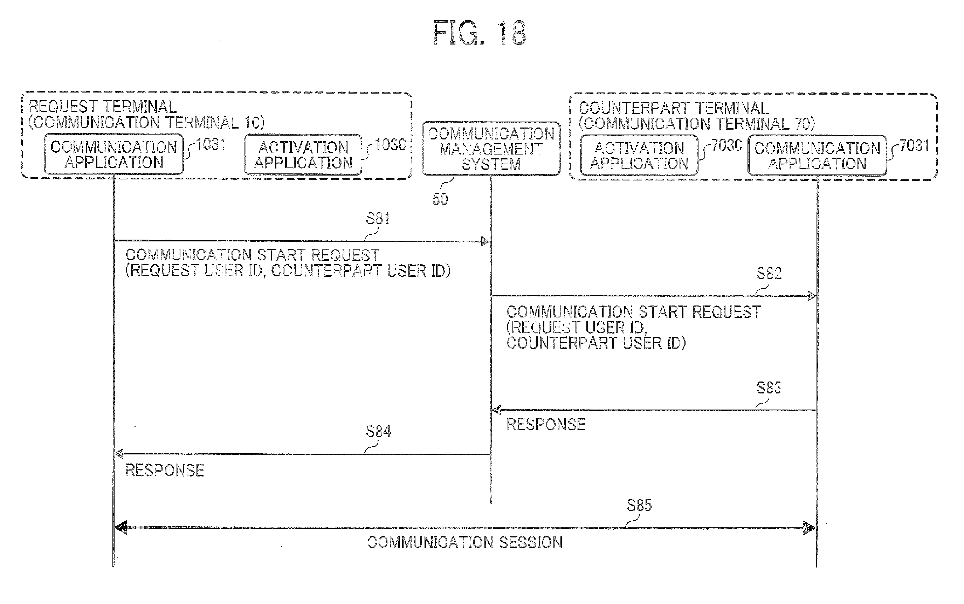

Referring to FIG 18, operation of establishing a communication session to be carried out using the communication application, performed by the communication system 1 of FIG. 1, is explained according to an example embodiment of the present invention. The operation of FIG. 18 may be performed, when the instruction to start communication is received at S72 of FIG. 17A

At S81, the communication application 1031 of the request terminal 10, which functions as the communication controller 1050, sends a communication start request (communication start request information) for starting communication, to the communication management system 50 through the data transmitter/receiver 21. The communication start request information includes a user ID for identifying the user at the request terminal 10, and a user ID for identifying the user at the counterpart terminal 70. The communication management system 50 receives the communication start request, at the data transmitter/receiver 51.

At S82, the communication management system 50 sends the communication start request (communication start request information) that requests to start communication, to the communication application 7031 of the counterpart terminal 70, through the data transmitter/receiver 51. The communication start request information includes the user ID of the request terminal 10, and the user ID of the counterpart terminal 70, which are received from the communication application 1031 at 581. The communication application 7031 of the counterpart terminal 70 receives the communication start request at the data transmitter/receiver 81.

At S83, the communication application 7031, functioning as the communication controller 7060, sends a response to the communication management system 50 through the data transmitter/receiver 81. The response indicates whether to accept or not to accept the communication start request When the user at the counterpart terminal 70 decides to start communication, the response indicates that the communication start request is accepted. When the user at the counterpart terminal 70 decides not to start communication, the response indicates that the communication start request is not accepted, or rejected. The communication management system 50 receives the response at the data transmitter/receiver 51.

At S84, the data transmitter/receiver 51 of the communication management system 50 transmits the response to the communication application 1031 of the request terminal 10, based on the response received from the communication application 7031 of the counterpart terminal 70. The communication application 1031, functioning as the communication controller 1050, receives the response at the data transmitter/receiver 21.

Assuming that the response from the counterpart terminal 70 indicates to accept the communication start request, at S85, a communication session is established between the communication application 1031 of the request terminal 10 and the communication application 7031 of the counterpart terminal 70.

As described above, in one aspect of the present invention, an activation application of a first communication terminal sends an activation request to a communication application at the first communication terminal, and further sends an activation request to a communication application at a second communication terminal that is compatible with the communication application at the first communication terminal. By activating the communication application only when it is needed, for example, when communication is to be started using the communication application, electric power consumption for the communication terminal can be greatly reduced.

Further, by activating the communication application at the second communication terminal that is compatible with the communication application to be activated at the first communication terminal, communication can be started between the first communication terminal and the second communication terminal more smoothy. For example, even when the communication application can be activated at the first communication terminal, unless the communication application at the second communication terminal is made activated, communication with the second communication terminal cannot be started.

In another aspect of the present invention, an activation application of the second communication terminal sends an activation request to a communication application at the first communication terminal, for example, in response to the activation request from the first communication terminal. The activation application of the second communication terminal further sends notification indicating preparation for communication by the communication application at the second communication terminal completes, to the first communication terminal. By activating the communication application at the second communication terminal only when it is needed, for example, when communication is to be started using the communication application, electric power consumption for the communication terminal can be greatly reduced.

Further, by sending notification indicating that preparation for communication by the communication application at the second communication terminal completes, to the first communication terminal, communication can be started between the first communication terminal and the second communication terminal more smoothly. For example, without being notified of when the communication application at the second communication terminal becomes ready for communication, the first communication terminal is not able to know when to start communication.

In most cases, the communication application periodically communicates with a server, such as a server managed by a services provider. With the increased number of communication applications installed on the communication terminal, a data traffic tends to increase, thus consuming more electric power. As long as the activation application is activated, it is not necessary to activate the communication applications, thus reducing electric power consumption.

As described above, in one aspect of the present invention, when a predetermined period elapses after the activation request transmitter of the activation controller transmits an activation request to the communication application, the inquiry transmitter sends an inquiry to the communication application to ask whether preparation to start communication by the communication application completes. With this function, the communication application does not have to be provided with the function of sending notification whether preparation to start communication completes in response to the activation request.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

In one example, at S51 (FIG 14), the activation application 1030 sends an inquiry to the communication application 1031, which asks whether preparation for communication completes. In alternative to sending an inquiry from the activation application 1030 to the communication application 1031, the communication application 1031 may send a response indicating whether preparation for communication completes to the activation application 1030, in response to the activation request received at S46. In a substantially similar manner, in alternative to sending an inquiry from the activation application 7030 to the communication application 7031 at S68 (FIG. 17B), the communication application 7031 may send a response indicating whether preparation for communication completes to the activation application 7030, in response to the activation request received at S63.

In this example, any one of identification such as the terminal ID includes any type of identification information that can be expressed by any language, character, symbol, mark, or any combination of language, character, symbol, and mark. For example, the communication application ID is one example of communication application identification, such that a communication application name may be used as identification for uniquely identifying the communication application.

Further, the icon illustrated in FIG. 16 may have any desired appearance, such that it may include a picture, a mark, a character, or any combination thereof.

In any one of the above-described examples, the application management system 30 and the communication management system 50 may be each implemented by a single computer. Alternatively, any number of parts, functions, or modules of the application management system 30 and the communication management system 50 may be classified into a desired number of groups to be carried out by a plurality of computers. In case the program is stored in a server implemented by the single computer, the program to be provided by the server may be transmitted, one module by one module, after dividing into a plurality of modules, or may be transmitted at once. In case server with the program is implemented as a plurality of computers, each computer may transmit each module that is stored in its memory, after the program is divided into a plurality of modules.

Further, while the activation controller and the communication controller are incorporated into one apparatus, the activation controller and the communication controller may be implemented by a plurality of apparatuses, which may be provided over a network.

A recording medium storing any one of the terminal control program, application management program, and communication management program, or a storage device such as the HDD 204 that stores any one of the terminal control program, application management program, and communication management program may be distributed within the country or to another country as a computer program product.

Further, the date and time information stored in the terminal state management table of FIG. 12 is expressed in terms of date and time. Alternatively, the date and time information may be expressed only in terms of time such as the time at which information is received.

Further, in the above-described examples, the terminal IP address is managed using the terminal state management table of FIG. 12. Alternatively, the communication terminal may be managed using any other identification information or using any other tables. For example, when the terminal needs to be identified on the communications network 2, the terminal may be managed using Fully Qualified Domain Name (FQDN). In such case, the communication system 1 is provided with a domain name system (DNS) server that obtains the IP address that corresponds to the FQDN of the terminal.

In the above-described examples, the communication terminal 10 is implemented by the videoconference apparatus, and the communication terminal. 70 is implemented by the smart phone. Alternatively, any one of the communication terminals in the communication system 1 may be implemented by the Internet Protocol (IP) telephone, the Internet telephone, or a personal computer (PC).

In one example, the communication terminal allow the users to verbally communicate with each other. In another example, the communication terminals may allow the users to communicate various data including sound data and image data, by accessing a server. In such case, any one of the communication terminal in the communication system 1 may be a server, a car navigation system, or a game machine.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet The processing apparatuses can compromise any suitably programmed apparatuses such as a general purpose computer, personal digital assistant, mobile telephone (such as a WAP or 30-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

In one example, the present invention may reside in a communication apparatus capable of communicating with a counterpart communication apparatus using a communication application. The communication apparatus includes an activation request transmitter that sends an activation request to the communication application, and a data transmitter that sends notification to the counterpart communication apparatus through a network after the communication application is activated in response to the activation request, the notification indicating that preparation to start communication by the communication application completes.

In one example, in the above-described communication apparatus, the notification indicating that preparation to start communication completes is second notification. The communication apparatus further includes a notification receiver that receives first notification that indicates preparation to start communication by the communication application completes, from the communication application in response to the activation request. When the first notification is received at the notification receiver from the communication application, the data transmitter sends the second notification to the counterpart communication apparatus through the network.

In one example, the communication apparatus further includes an inquiry transmitter that sends an inquiry to the communication application to ask whether preparation to start communication by the communication application completes, after the activation request transmitter transmits the activation request to the communication application. The notification receiver receives the first notification from the communication application that is activated, in response to the inquiry sent to the communication application.

In one example, the communication apparatus further includes a data receiver that receives communication application identification information for identifying the communication application to be activated, from the counterpart communication application, through the network, before starting communication with the counterpart communication apparatus. The activation request transmitter sends the activation request to the communication application identified by the communication application identification information) received at the data receiver.

In one example, the communication apparatus further includes a memory, which stores communication application identification information in association with information indicating a communication application available for use by the communication apparatus. The communication apparatus searches the memory using the communication application identification information received at the data receiver to identify the communication application to be activated. The activation request transmitter sends the activation request to the communication application to be activated, which is associated with the communication application identification information.

In one example, the communication apparatus transmits sound data using the communication application. For example, the communication. apparatus includes any one of a smart phone, videoconference apparatus, mobile phone, personal computer, and an IP telephone.

In one example, the communication apparatus transmits image data using the communication application. For example, the communication apparatus includes any one of a game machine and a car navigation system.

In one example, the present invention may reside in a method of communicating with a counterpart communication apparatus using a communication application. The method includes: sending an activation request to the communication application; and sending notification to the counterpart communication apparatus through a network, after the communication application is activated in response to the activation request, the notification indicating that preparation to start communication by the communication application completes.

In one example, the notification indicating the preparation to start communication completes is second notification. The method further includes; receiving, at a notification receiver, first notification indicating preparation to start communication by the communication application completes, from the communication application in response to the activation request. When the first notification is received at the notification receiver from the communication application, the second notification is transmitted to the counterpart communication apparatus through the network.

In one example, the method further includes sending an inquiry to the communication application to ask whether preparation to start communication by the communication application completes, after the activation request is transmitted to the communication application. The first notification is received from the communication application that is activated, in response to the inquiry transmitted to the communication application.

In one example, the method further includes: receiving communication application identification information for identifying the communication application to be activated, from the counterpart communication application, through the network, before starting communication with the counterpart communication apparatus. The activation request is sent to the communication application identified by the communication application identification information that is received

In one example, the method further includes: storing, in a memory, communication application identification information for identifying a communication application in association with the communication application available for use by the communication apparatus; and searching the memory using the communication application identification information received from the counterpart communication apparatus to identify the communication application to be activated. The activation request is sent to the communication application to be activated, which is associated with the communication application identification information.

In one example, the present invention may reside in a communication apparatus capable of communicating with a counterpart communication apparatus using a communication application. The communication apparatus includes an activation request transmitter that sends an activation request to the communication application, and a data transmitter that sends an activation request to the counterpart communication apparatus through a network, the activation request requesting activation of a communication application at the counterpart communication apparatus that is compatible with the communication application that is activated in response to the activation request.

In one example, the communication apparatus further includes a notification receiver that receives notification indicating that preparation to start communication by the communication application completes, from the communication application that is activated in response to the activation request. When the notification is received at the notification receiver, the data transmitter transmits the activation request to the communication application at the counterpart communication apparatus through the network.

In one example, the communication apparatus further includes an inquiry transmitter that sends an inquiry to the communication application, which asks whether preparation to start communication by the communication application completes, after the activation request transmitter transmits the activation request to the communication application. The notification receiver receives the notification from the communication application that is activated, in response to the inquiry transmitted from the inquiry transmitter to the communication application.

In one example, the communication application further includes an operation input that accepts selection of the communication application to be activated, before transmitting the activation request to the communication application. The activation request transmitter transmits the activation request to the communication application that is selected.

In one example, the communication apparatus further includes a memory, which stores communication application identification information for identifying a communication application available for use by the communication apparatus, in association with information indicating the communication application. The communication apparatus searches the memory using the communication application identification information for identifying the communication application that is selected, to identify the communication application to be activated.

In one example, the present invention may reside in a method of communicating with a counterpart communication apparatus using a communication application. The method includes: transmitting an activation request to the communication application; and transmitting an activation request to a communication application at the counterpart communication apparatus that is compatible with the communication application that is activated in response to the activation request, to the counterpart communication apparatus through a network.

In one example, the present invention may reside in a non-transitory recording medium storing a plurality of instructions which, when activated by a processor, cause the processor to perform any one of the communication methods.

## Claims

1. A method of communicating with a counterpart communication apparatus (70) using a communication application (1060), performed by an activation controller (1050) that controls activation of the communication application (1060) at a communication apparatus (10), the method comprising:
sending (S46, S63) an activation request to the communication application (1060), which requests the communication application (1060) to be activated to prepare for communication; and
transmitting (S53, S71) an activation request that requests to activate a communication application (7060) at the counterpart communication apparatus (70), or notification indicating that preparation to start communication by the communication application (1060) completes, to the counterpart communication apparatus (70) via a network (2) after the communication application (1060) is activated in response to the activation request.

2. The communication method of claim 1, further comprising:
receiving (S52, S69) notification indicating that preparation to start communication by the communication application (1060) completes, from the communication application (1060) in response to the activation request,
wherein the activation request or the notification is transmitted to the counterpart communication apparatus (70) via the network (2), when the notification from the communication application (1060) is received at the activation controller (1050).

3. The communication method of claim 2, further comprising:
sending (S51, S68) an inquiry to the communication application (1060) to ask whether preparation to start communication by the communication application (1060) completes, after sending the activation request to the communication application (1060),
wherein the notification is received at the activation controller (1050) from the communication application (1060) that is activated, in response to the inquiry sent to the communication application (1060).

4. The communication method of any one of claims 1 to 3, wherein, when the activation controller (1050) of the communication apparatus (10) transmits the notification to the counterpart communication apparatus (70) via the network (2), the method further comprising:
receiving (S61) communication application identification information for identifying the communication application (1060) to be activated, from the counterpart communication application (70), through the network (2),
wherein the activation request is sent to the communication application identified by the communication application identification information that is received.

5. The communication method of any one of claims 1 to 3, wherein, when the activation controller (1050) of the communication apparatus (10) transmits the activation request to the counterpart communication apparatus (70) via the network (2), the method further comprising:
receiving (S44) a user input that selects the communication application (1060) to be activated,
wherein the activation request is sent to the communication application (1060) identified by the communication application (1060) selected by the user input.

6. The communication method of claim 4 or 5, further comprising:
storing, in a memory (7000), for each of a plurality of communication applications available for use, association information that associates communication application identification information with information to be used for activating the communication application; and
identifying (S45, S62) the communication application (1060) to be activated, using the association information stored in the memory (7000).

7. The communication method of claim 5 or 6, wherein the activation request requests activation of the communication application (7060) at the counterpart communication application (70) being compatible with the communication application (1060) at the communication apparatus (7060) that is activated.

8. The communication method of any one of claims 1 to 7, further comprising:
transmitting sound data or image data using the communication application (1060) through the network (2) to communicate with the counterpart communication apparatus (70).

9. A communication apparatus (10, 70) performing the communication method of any one of claims 1 to 8, wherein the communication apparatus (10, 70) includes one of a smart phone, a videoconference apparatus, a portable phone, a personal computer, an internet protocol telephone, a game machine, and a car navigation system.

10. A carrier means carrying computer readable code for controlling a computer to carryout the communication method of any one of claims 1 to 8.
